# EUROPEAN PATENT SPECIFICATION

(11) **EP 2 453 831 B1**
(45) Date of publication and mention of the grant of the patent: **14.08.2013**
(21) Application number: 10733041.7
(22) Date of filing: 18.06.2010
(51) Int. Cl.: A61C 17/02, A61C 17/028

(54) **ATOMIZED LIQUID ORAL CLEANING APPLIANCE**
MUNDREINIGUNGSYSTEM MIT SPRÜHNEBELDÜSE
APPAREIL DE NETTOYAGE DE LA CAVITÉ BUCCALE À LIQUIDE VAPORISÉ

(30) Priority: 14.07.2009 US 225245 P
(43) Date of publication of application: 23.05.2012
(73) Proprietor: Koninklijke Philips Electronics N.V., 5621 BA Eindhoven (NL)
(72) Inventor: KLOSTER, Tyler, G., Briarcliff Manor New York 10510-8001 (US); JANSSEN, Jozef, Johannes, Maria, Briarcliff Manor New York 10510-8001 (US); JOHNSON, Ahren, Karl, Briarcliff Manor New York 10510-8001 (US)
(74) Representative: Coops, Peter
(86) International application number: PCT/IB2010/052770
(87) International publication number: WO 2011/007273

(56) References cited:
- WO-A1-2010/076694
- WO-A2-2008/012707
- JP-A- 11 104 149

## Description

This invention is directed to an atomized liquid/liquid droplet oral cleaning appliance which uses pressurized gas to produce liquid droplets and more specifically concerns a low-pressure gas assembly for such an appliance.

Liquid atomized spray/liquid droplet oral cleaning appliances include a source of pressurized gas, typically air, and a source of liquid, typically water, with the gas and liquid being directed to a mixing chamber portion of the appliance to produce a spray or stream of liquid droplets. The liquid droplets are then directed through a nozzle assembly and out an exit tip thereof to selected areas of the teeth to be cleaned. Typically, the selected areas are the interdental regions, but the appliance can be used to clean all regions of the teeth, including around orthodontic fixtures.

The source of pressurized gas can be a CO₂ cartridge or similar source of high pressure air, typically up to 62 bar (900 psi). These appliances are thus typically expensive during use, since the cartridges must be periodically replaced; the high pressure arrangement also presents some design/engineering challenges.

WO-A-2008 012 707 describes a liquid droplet oral cleaning appliance comprising an appliance mixing chamber and an actuating assembly activated by a user for generating bursts of gas. The bursts of gas are directed into the appliance mixing chamber. The oral cleaning appliance further comprises a system for directing bursts of liquid into the mixing chamber. The appliance mixing chamber includes a liquid inlet and a gas inlet for receiving the bursts of liquid and gas. The mixing chamber has an outlet for liquid droplets produced within the mixing chamber. The droplets are directed to a nozzle assembly.

A similar liquid droplet oral cleaning appliance is also described in WO-A-2010 076 694, which was published on 08.07.2010.

Hence, it is desirable to have an atomized liquid/liquid droplet oral cleaning appliance which is effective in cleaning but which uses low-pressure gas.

Accordingly, a liquid droplet oral cleaning appliance is described and shown, comprising: an actuating assembly activated by a user for generating low-pressure bursts of gas, the bursts of gas being directed into an appliance mixing chamber; a system for directing bursts or doses of liquid into the mixing chamber; and an appliance mixing chamber for receiving the bursts of liquid and gas, the mixing chamber having an outlet for liquid droplets produced within the chamber, directed to a nozzle assembly, wherein the diameter of the gas inlet is within the range of 1-5 mm, and wherein the center line of the gas inlet is offset from a center line of the droplet outlet by a distance within the range of 1-5 mm.
Figure 1 is a cross-sectional view showing an oral cleaning appliance incorporating the present invention.
Figure 2 is a cross-sectional diagram showing the mixing chamber portion of the appliance of Figure 1.

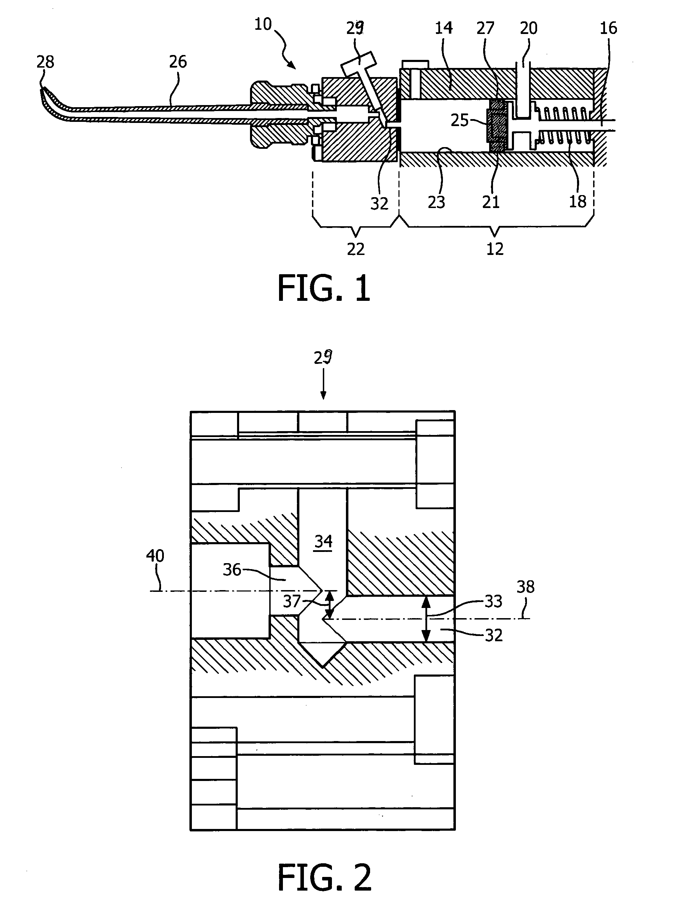

Figure 1 shows an oral cleaning appliance using liquid droplets for cleaning produced by a low-pressure gas system. The appliance 10 includes a spring assembly 12. The spring assembly 12 includes a hollow body 14 with a plunger 16 and spring 18 mounted therein for back and forth movement. The plunger 16 is moved to the rear in body 14 against the action of spring 18 by user action on an actuating element or button 20 which engages the plunger. The forward end 21 of the plunger includes a head element which has a gas-tight connection with interior wall 23 of body 14. The forward end has a raised central portion 25 with a surrounding trough portion 27. The head element pushes air present in the body 14 into a mixing chamber 22, described in more detail below and shown in Figure 2, following release of the actuating element and resulting forward movement of the plunger, propelled by the action of spring 18. Air moves into hollow body 14 following each action, enabling repetitive bursts of gas to the mixing chamber.

Prior to each burst of gas, e.g. air, entering mixing chamber 22, water or other liquid is moved into mixing chamber 22 through a water inlet 29. This can be done in various ways, such as by a pump, for instance, or by suction action or gravity feed or some other means. The gas is moved into the mixing chamber at relatively low pressure, typically 2,1-6,9 bar (30-100 psi). The low-pressure gas operates on the liquid in the mixing chamber to produce an atomized spray or liquid droplets, of a size on the order of 5-100 microns in diameter.

The low pressure gas action accelerates the droplets into an elongated nozzle assembly 26 and out the exit tip 28 at an effective velocity for cleaning. The spray is directed by the user to the desired dental regions, particularly the interdental regions and around orthodontic fixtures.

The general configuration, structure and arrangement of the spring assembly, the water inlet and the nozzle assembly are conventional and thus not described in significant detail. The configuration of the mixing chamber is important, as it incorporates a particular flow path geometry of low pressure gas relative to the entering liquid to produce the necessary turbulence to achieve the desired atomization of the liquid and acceleration of the resulting spray droplets. High-pressure gas appliances or continuous flow gas appliances do not require a particular mixing chamber configuration to insure turbulence, since the high pressure or the flow is sufficient to create by itself the desired droplets, both size and speed thereof. The present mixing chamber arrangement, operating in a burst mode, accomplishes the desired atomization at low gas pressures.

Referring now to Figure 2, the mixing chamber 22 is shown in more detail, including a gas entry flow line 32, a liquid entry flow line 34 and a droplet exit flow line 36. It has been discovered that there are several characteristics of the gas, liquid, and droplet flow lines which create sufficient turbulence to produce liquid droplets, even at low gas pressures.

One important characteristic is the diameter of the gas inlet line 32. Gas inlet line 32 is generally cylindrical, *i.e*. it has a circular internal cross-section. In general, the diameter 33 of the gas inlet line will be in the range of 1-5 mm, preferably in the range of 3-4 mm. Another important factor is the angular intersection between gas inlet line 32 and water inlet line 34. The preferred angle is 90° or greater. While 90° is generally specifically preferred, the angle of intersection could be in the range of 90°-135° and still produce acceptable results.

A third significant factor is the offset 37 between the centerline 38 of gas inlet line 32 and the centerline 40 of droplet outlet line 36. It is desired that the offset be in the range of 1-5 mm, with a preferred/optimal offset in the range of 2-1/2 to 3 mm. Of the above three factors, the internal diameter of the gas inlet line appears to be the most significant parameter for controlling the atomization of the spray.

The advantage of the above arrangement is that an effective atomized spray can be produced, with relatively low pressure, eliminating the expense and inconvenience of CO₂ gas cartridges.

In operation, each burst of gas from the spring assembly will have a time duration of between 10-100 milliseconds, while successive doses of liquid will be in the range of 0.02-0.2 ml. This produces liquid droplets in the range of 5-100 microns, which has proved to be a suitable size for effective cleaning of the teeth. Typically, the velocity of the droplets will be approximately 5-80 m/s with such an arrangement.

The amount of atomization can be controlled by changing one or more of the above parameters. The appliance produces effective oral cleaning in a hand-held appliance, effective for interdental cleaning, thus providing an alternative to a traditional hand-held flossing device.

## Claims

1. A liquid droplet oral cleaning appliance (10), comprising:
an appliance mixing chamber (22);
an actuating assembly (12) activated by a user for generating low-pressure bursts of gas, the bursts of gas being directed into the appliance mixing chamber (22); and
a system (29) for directing bursts or doses of liquid into the appliance mixing chamber (22);
wherein the appliance mixing chamber (22) includes a liquid inlet (34) and a gas inlet (32) for receiving the bursts of liquid and gas, the appliance mixing chamber (22) having an outlet (36) for liquid droplets produced within the appliance mixing chamber (22) directed to a nozzle assembly (26), wherein the diameter (33) of the gas inlet is within the range of 1-5 mm, and wherein the center line of the gas inlet is offset from a center line of the droplet outlet by a distance (37) within the range of 1-5 mm.

2. The oral cleaning appliance of claim 1, wherein the diameter of the gas inlet (32) is within the range of 3-4 mm and the offset is within the range of 2,5mm to 3 mm

3. The oral cleaning appliance of claim 1, wherein the gas inlet line (32) intersects a liquid inlet line (34) to the appliance mixing chamber (22) at an angle within the range of 90°-135°.

4. The oral cleaning appliance of claim 3, wherein the gas inlet line (32) intersects the liquid inlet line (34) at approximately 90°.

5. The oral cleaning appliance of claim 1, wherein the gas pressure is within the range of 2,1 - 6,9 bar (30-100 psi).

6. The oral cleaning appliance of claim 1, wherein the liquid is provided in successive doses of 0.02-0.2 ml, and wherein the gas is provided in bursts of between 10-100 milliseconds.

7. The oral cleaning appliance of claim 1, wherein the liquid is water and the gas is air.

## Patentansprüche

1. Auf Flüssigkeitströpfchen basierendes Mundreinigungsgerät (10), das Folgendes umfasst:
eine Mischkammer (22) des Geräts;
eine durch einen Benutzer aktivierte Betätigungsbaugruppe (12) zur Erzeugung von Gasstößen mit niedrigem Druck, wobei die Gasstöße in die Mischkammer (22) des Geräts gelenkt werden; und
ein System (29) zum Lenken von Flüssigkeitsstößen oder -dosen in die Mischkammer (22) des Geräts;
wobei die Mischkammer (22) des Geräts einen Flüssigkeitseinlass (34) und einen Gaseinlass (32) zum Empfangen der Flüssigkeits- und Gasstöße umfasst, wobei die Mischkammer (22) des Geräts einen Auslass (36) für innerhalb der Mischkammer (22) des Geräts erzeugte Flüssigkeitströpfchen hat, die zu einer Düsenbaugruppe (26) gelenkt werden, wobei der Durchmesser (33) des Gaseinlasses innerhalb des Bereichs von 1 bis 5 mm liegt und wobei die Mittellinie des Gaseinlasses um einen Abstand (37) innerhalb eines Bereichs von 1 bis 5 mm von einer Mittellinie des Tröpfchenauslasses versetzt ist.

2. Mundreinigungsgerät nach Anspruch 1, wobei der Durchmesser des Gaseinlasses (32) innerhalb des Bereichs von 3 bis 4 mm liegt und der Versatz innerhalb des Bereichs von 2,5 bis 3 mm liegt.

3. Mundreinigungsgerät nach Anspruch 1, wobei die Gaseinlassleitung (32) eine Flüssigkeitseinlassleitung (34) zu der Mischkammer (22) des Geräts in einem Winkel schneidet, der innerhalb des Bereichs von 90° bis 135° liegt.

4. Mundreinigungsgerät nach Anspruch 3, wobei die Gaseinlassleitung (32) die Flüssigkeitseinlassleitung (34) bei etwa 90° schneidet.

5. Mundreinigungsgerät nach Anspruch 1, wobei der Gasdruck innerhalb des Bereichs von 2,1 bis 6,9 bar (30 bis 100 psi) liegt.

6. Mundreinigungsgerät nach Anspruch 1, wobei die Flüssigkeit in aufeinanderfolgenden Dosen von 0,02 bis 0,2 ml zugeführt wird und wobei das Gas in Stößen von zwischen 10 und 100 ms zugeführt wird.

7. Mundreinigungsgerät nach Anspruch 1, wobei die Flüssigkeit Wasser ist und das Gas Luft ist.

## Revendications

1. Appareil de nettoyage buccal à gouttelettes liquides (10) comprenant une chambre de mélange de l'appareil (22) ;
un ensemble d'actionnement (12) activé par un utilisateur pour générer des salves de gaz à basse pression, les salves de gaz étant dirigées dans la chambre de mélange de l'appareil (22) ; et
un système (29) pour diriger les salves ou doses de liquide dans la chambre de mélange de l'appareil (22) ;
dans lequel la chambre de mélange de l'appareil (22) comprend une entrée de liquide (34) et une entrée de gaz (32) pour recevoir les salves de liquide et de gaz, la chambre de mélange de l'appareil (22) ayant une sortie (36) pour les gouttelettes liquides produites dans la chambre de mélange de l'appareil (22), dirigées vers un ensemble de buse (26), dans lequel le diamètre (33) de l'entrée de gaz est dans la gamme de 1-5 mm, et dans lequel la ligne centrale de l'entrée de gaz est décalée par rapport à une ligne centrale de la sortie de gouttelettes d'une distance (37) comprise entre 1 et 5 mm.

2. Appareil de nettoyage oral selon la revendication 1, dans lequel le diamètre de l'entrée de gaz (32) est dans la gamme de 3-4 mm et le décalage est dans la gamme de 2,5 mm à 3 mm.

3. Appareil de nettoyage buccal selon la revendication 1, dans lequel la ligne d'entrée de gaz (32) coupe une ligne d'entrée de liquide (34) à la chambre de mélange de l'appareil (22), selon un angle dans la gamme de 90°-135°.

4. Appareil de nettoyage buccal selon la revendication 3, dans lequel la ligne d'entrée de gaz (32) coupe la ligne d'entrée de liquide (34) approximativement à 90°.

5. Appareil de nettoyage buccal selon la revendication 1, dans lequel la pression de gaz est dans la gamme de 2,1 - 6,9 bars (30-100 psi).

6. Appareil de nettoyage buccal selon la revendication 1, dans lequel le liquide est fourni dans des doses successives de 0,02-0,2 ml et dans lequel le gaz est fourni par salves comprises entre 10-100 millisecondes.

7. Appareil de nettoyage buccal selon la revendication 1, dans lequel le liquide est de l'eau et le gaz est de l'air.
